(19) Europäisches Patentamt
European Patent Office
Office européen des brevets

(11) EP 4 542 287 A1

(12) EUROPEAN PATENT APPLICATION
published in accordance with Art. 153(4) EPC

(43) Date of publication:
**23.04.2025 Bulletin 2025/17**

(21) Application number: **23823965.1**

(22) Date of filing: **15.06.2023**

(51) International Patent Classification (IPC):
***G02C 7/00*** (2006.01) ***C08F 230/08*** (2006.01)
***C08K 5/18*** (2006.01) ***C08L 43/04*** (2006.01)
***C08F 2/00*** (2006.01) ***G02B 1/04*** (2006.01)
***G02B 5/22*** (2006.01)

(52) Cooperative Patent Classification (CPC):
**C08F 2/00; C08F 230/08; C08K 5/18; C08L 43/04; G02B 1/04; G02B 5/22; G02C 7/00**

(86) International application number:
**PCT/JP2023/022175**

(87) International publication number:
**WO 2023/243675 (21.12.2023 Gazette 2023/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.06.2022 JP 2022098334**

(71) Applicant: **Nikon-Essilor Co., Ltd.**
**Tokyo 130-0026 (JP)**

(72) Inventor: **PROVIN Christophe**
**Tokyo 130-0026 (JP)**

(74) Representative: **Hoffmann Eitle**
**Patent- und Rechtsanwälte PartmbB**
**Arabellastraße 30**
**81925 München (DE)**

# (54) EYEGLASS LENS

(57) The present invention provides a spectacle lens having an excellent brightening effect. The spectacle lens of the present invention comprises: a lens base; and a resin layer disposed on the lens base, wherein the resin layer contains a compound represented by Formula (A) and a resin, the resin contains a repeating unit 1 derived from silsesquioxane having a polymerizable group and a repeating unit 2 derived from a monofunctional monomer, a mass ratio of the repeating unit 1 to the repeating unit 2 is 60/40 to 95/5, and a transmittance of the spectacle lens at a wavelength of 556 nm is 65 to 80%.

FIG. 1

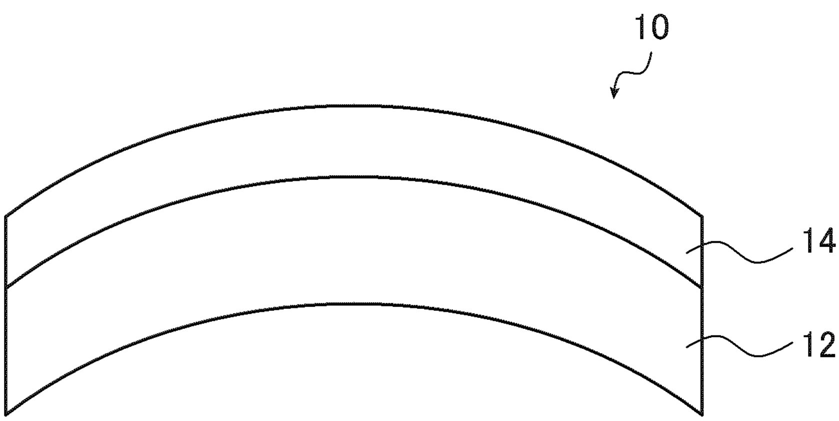


EP 4 542 287 A1

## Description

### TECHNICAL FIELD

The present disclosure relates to a spectacle lens.

### BACKGROUND ART

Patent Literature 1 discloses a photochromic-curable composition characterized by containing, as a radical polymerizable component (A), a silsesquioxane component (A1) having a radical polymerizable group and a bifunctional radical polymerizable monomer (A2) represented by the general formula (1), and further containing a photochromic compound (B).

### CITATION LIST

### PATENT LITERATURE

Patent Literature 1: WO 2013/008825 A

### SUMMARY OF INVENTION

The present disclosure relates to a spectacle lens comprising: a lens base; and a resin layer disposed on the lens base, wherein the resin layer contains a compound represented by Formula (A) and a resin, the resin contains a repeating unit 1 derived from silsesquioxane having a polymerizable group and a repeating unit 2 derived from a monofunctional monomer, a mass ratio of the repeating unit 1 to the repeating unit 2 is 60/40 to 95/5, and a transmittance of the spectacle lens at a wavelength of 556 nm is 65 to 80%.

### BRIEF DESCRIPTION OF DRAWINGS

[FIG. 1] FIG. 1 is an example showing a cross section of a spectacle lens.

### DESCRIPTION OF EMBODIMENTS

Hereinafter, a spectacle lens of the present disclosure will be described in detail.

The spectacle lens of the present disclosure has an excellent brightening effect because the transmittance at a wavelength of 556 nm is in a predetermined range or the like.

The brightening effect is at least one of the following effects: when a subject wears glasses having spectacle lenses, for example, an object to be observed looks brighter and more vivid (in particular, the vividness of red is not lost and red is brighter) and white (for example, a white screen of a personal computer (in particular, LED backlight)) looks whiter indoors where an object is not substantially irradiated with exposure light.

In addition, in the spectacle lens of the present disclosure, color tinting is reduced under light irradiation with exposure light, and the spectacle lens becomes more colorless.

In the present specification, "to" means including numerical values stated before and after "to" as a lower limit value and an upper limit value.

In the present specification, "(meth)acryl" is a concept including both acryl and methacryl, and "(meth)acryloyl group" is a concept including both an acryloyl group and a methacryloyl group.

In the present specification, ultraviolet rays are light having a wavelength of 100 to 400 nm. Visible light is light having a wavelength of 380 to 780 nm. Infrared rays are light having a wavelength of 780 nm to 1000 nm.

In the present specification, the transmittance may be measured by using, for example, a spectrophotometer (U-4100, manufactured by Hitachi, Ltd).

In the present specification, the solid content is components other than the solvent, and components are calculated as a solid content even if the components are in a liquid state at normal temperature and normal pressure (25°C, 101.3 kPa). The solid content may be a component that chemically changes in the course of curing treatment.

FIG. 1 is a cross-sectional view of an embodiment of a spectacle lens.

A spectacle lens 10 illustrated in FIG. 1 includes a lens base 12 and a resin layer 14 disposed on the lens base 12.

In FIG. 1, the resin layer 14 is disposed to be in direct contact with the lens base 12, but is not limited to this form, and another layer (for example, a primer layer) may be disposed between the lens base 12 and the resin layer 14. That is, the resin layer 14 may be directly disposed on the lens base 12, or may be indirectly disposed on the lens base 12 via

another layer.

Further, in FIG. 1, the resin layer 14 is disposed on one surface of the lens base 12, but the resin layer 14 may be disposed on both surfaces of the lens base 12.

[Spectacle lens]

The spectacle lens has a lens base and a resin layer disposed on the lens base.

In the spectacle lens, it is preferable that the transmittance at the wavelength of 556 nm increases due to irradiation with light (hereinafter, also referred to as "specific light") to which a compound represented by Formula (A) (hereinafter, also referred to as a "compound A") is exposed.

The compound A contained in the resin layer is a compound having a characteristic of exhibiting a weak red color before specific light irradiation, and decoloring or exhibiting a further weaker red color after specific light irradiation. Therefore, when the spectacle lens is irradiated with the specific light, the compound A is decolored or exhibits a red color more weakly, so that a color change similar to that of the compound A also occurs in the spectacle lens. As a result, the transmittance of the spectacle lens at the wavelength of 556 nm may increase. In addition, when the spectacle lens after the specific light irradiation is stored without being irradiated with the specific light, the spectacle lens gradually returns to the state before the specific light irradiation, that is, the color change in the spectacle lens due to the specific light can reversibly occur.

The specific light is light to which the compound A is exposed.

The light to which the compound A is exposed is light that causes a structural change of the compound A when the compound A is irradiated. Specifically, the compound A is a compound that can be structurally changed from a ring-closed form to a ring-opened form by being irradiated with specific light, and is an inverse photochromic compound in which the color of the compound A fades with this structural change. The specific light is not particularly limited as long as it causes a change in a chemical structure of the compound A (for example, a ring-opening reaction is performed), and examples thereof include ultraviolet rays, visible rays, and infrared rays, and ultraviolet rays are preferable.

For example, in a case where the specific light is ultraviolet rays, the spectacle lens of the present disclosure allows a brightening effect to be obtained indoors where there is substantially no ultraviolet ray exposure, and may be used as a normal undyed spectacle lens outdoors where the spectacle lens decolors with ultraviolet ray exposure.

The transmittance of the spectacle lens at the wavelength of 556 nm is 65 to 80%.

The transmittance is 65 to 80%, preferably 67 to 80%, and more preferably 68 to 79%.

The transmittance of the spectacle lens at the wavelength of 556 nm is obtained by measuring the transmittance by using the spectacle lens after the spectacle lens is left under a fluorescent lamp in a room for 30 minutes. In the above environment, the structural change from the ring-closed form to the ring-opened form of the compound A does not proceed. That is, the transmittance of the spectacle lens at the wavelength of 556 nm is a transmittance in a state in which the compound A has a ring-closed form.

When the spectacle lens is irradiated with light at the illuminance of 90 $W/cm^2$ for 240 seconds by using a halogen lamp, a difference ($\Delta T$) in average transmittance before and after irradiation in each wavelength range preferably satisfies at least one of relationships represented by the following formulas (1) to (4), and more preferably satisfies at least the relationship represented by the following formula (3). Hereinafter, irradiation at an illuminance of 90 $W/cm^2$ for 240 seconds using a halogen lamp will be referred to as specific irradiation.

$$\Delta T_1 = T_{12} - T_{11} \quad \text{Formula (1)}$$

$$\Delta T_2 = T_{22} - T_{21} \quad \text{Formula (2)}$$

$$\Delta T_3 = T_{32} - T_{31} \quad \text{Formula (3)}$$

$$\Delta T_4 = T_{42} - T_{41} \quad \text{Formula (4)}$$

When an average transmittance of the spectacle lens in the wavelength range of 380 to 780 nm before the specific irradiation is defined as $T_{11}$ (%) and an average transmittance of the spectacle lens in the wavelength range of 380 to 780 nm after the specific irradiation is defined as $T_{12}$ (%), the spectacle lens preferably satisfies the relationship of Formula (1).

$T_{11}$ is preferably 70 to 90%, and more preferably 72 to 87%. $T_{12}$ is preferably 80 to 90%, and more preferably 85 to 90%.

$\Delta T_1$ is preferably 2.0 to 20.0%, and more preferably 2.0 to 18.0%.

Note that the average transmittance of the spectacle lens in the wavelength range of 380 to 780 nm before specific irradiation is obtained by measuring the transmittance by using the spectacle lens after leaving the spectacle lens under a fluorescent lamp in a room for 30 minutes, similarly to the measurement of the transmittance of the spectacle lens at the wavelength of 556 nm.

When the average transmittance of the spectacle lens in the wavelength range of 430 to 470 nm before the specific irradiation is defined as $T_{21}$ (%) and the average transmittance of the spectacle lens in the wavelength range of 430 to 470 nm after the specific irradiation is defined as $T_{22}$ (%), the spectacle lens preferably satisfies the relationship of Formula (2).

$T_{21}$ is preferably 75 to 90%, and more preferably 84 to 90%. $T_{22}$ is preferably 82 to 90%, and more preferably 85 to 90%.

$\Delta T_2$ is preferably 0.0 to 6.0%, and more preferably 0.0 to 3.0%.

Note that the average transmittance of the spectacle lens in the wavelength range of 430 to 470 nm before specific irradiation is obtained by measuring the transmittance by using the spectacle lens after leaving the spectacle lens under a fluorescent lamp in a room for 30 minutes, similarly to the measurement of the transmittance of the spectacle lens at the wavelength of 556 nm.

When the average transmittance of the spectacle lens in the wavelength range of 530 to 570 nm before the specific irradiation is defined as $T_{31}$ (%) and the average transmittance of the spectacle lens in the wavelength range of 530 to 570 nm after the specific irradiation is defined as $T_{32}$ (%), the spectacle lens preferably satisfies the relationship of Formula (3).

$T_{31}$ is preferably 70 to 90%, and more preferably 72 to 87%. $T_{32}$ is preferably 80 to 90%, and more preferably 85 to 90%.

$\Delta T_3$ is preferably 7.0 to 20.0%, and more preferably 7.0 to 18.0%.

Note that the average transmittance of the spectacle lens in the wavelength range of 530 to 570 nm before specific irradiation is obtained by measuring the transmittance by using the spectacle lens after leaving the spectacle lens under a fluorescent lamp in a room for 30 minutes, similarly to the measurement of the transmittance of the spectacle lens at the wavelength of 556 nm.

When the average transmittance of the spectacle lens in the wavelength range of 630 to 670 nm before the specific irradiation is defined as $T_{41}$ (%) and the average transmittance of the spectacle lens in the wavelength range of 630 to 670 nm after the specific irradiation is defined as $T_{42}$ (%), the spectacle lens preferably satisfies the relationship of Formula (4).

$T_{41}$ is preferably 80 to 92%, and more preferably 85 to 92%. $T_{42}$ is preferably 85 to 92%, and more preferably 87 to 92%.

$\Delta T_4$ is preferably 0.0 to 7.0%, and more preferably 0.0 to 4.0%.

Note that the average transmittance of the spectacle lens in the wavelength range of 630 to 670 nm before specific irradiation is obtained by measuring the transmittance by using the spectacle lens after leaving the spectacle lens under a fluorescent lamp in a room for 30 minutes, similarly to the measurement of the transmittance of the spectacle lens at the wavelength of 556 nm.

Examples of a method of adjusting the values of $\Delta T_1$ to $\Delta T_4$ include a method of adjusting a content of the compound A with respect to the total mass of the resin layer and a thickness of the resin layer.

Hereinafter, each member that may be included in the spectacle lens will be described in detail.

<Lens base>

The spectacle lens has a lens base.

Examples of the type of the lens base include a lens base composed of an organic material or an inorganic material, and a lens base composed of an inorganic material (for example, a glass base) is preferable.

Examples of the lens base include a finish lens that is optically finished on both a convex surface and a concave surface and formed according to a desired power, a semi-finish lens in which only a convex surface is finished as an optical surface (for example, a spherical surface, a rotation target aspheric surface, or a progressive-addition surface), and a lens in which the concave surface of the semi-finish lens is processed and polished according to a wearer's prescription.

Examples of the organic material include resins, and specific examples thereof include a (meth)acrylic resin, a thiourethane-based resin, an allyl-based resins, an episulfide-based resin, a polycarbonate-based resin, a polyurethane-based resin, a polyester-based resin, a polystyrene-based resin, a polyethersulfone-based resin, a poly-4-methylpentene-1 based resin, and a diethylene glycol bisallyl carbonate-based resin (CR-39).

Examples of the inorganic material include silicon, ceramics, and glass, and glass is preferable.

The thickness of the lens base is often 1 to 30 mm in terms of handleability.

The transmittance of the lens base at the wavelength of 556 nm is preferably 80% or more, and more preferably 90% or more. The upper limit may be less than 100%.

<Resin layer>

The spectacle lens has a resin layer disposed on the lens base.

The resin layer contains a compound A and a resin X that will be described later.

(Compound represented by Formula (A))

The compound A has a characteristic of exhibiting a weak red color before specific light irradiation, and decoloring or exhibiting a further weaker red color after specific light irradiation. In other words, the spectacle lens having the resin layer containing the compound A exhibits a weak red color before the specific light irradiation, and decolors or exhibits a further a weaker red color after the specific light irradiation. Since a weak red color is exhibited before the specific light irradiation, the brightening effect is easily obtained.

The resin layer may further contain another dye as long as it contains the compound A.

[Chemical Formula 1]

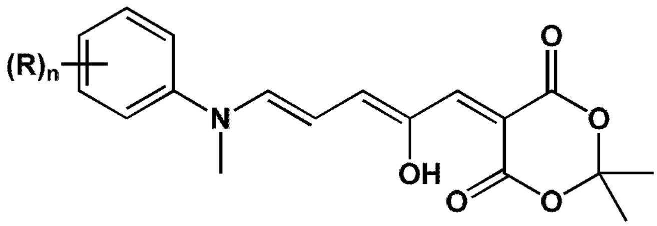

(A)

In Formula (A), R represents a methyl group, a methoxy group, or a dialkylamino group. n represents an integer of 0 to 5.

The alkyl group constituting the dialkylamino group may be linear, branched, or cyclic. The number of carbon atoms in the alkyl group is preferably 1 to 10.

n is preferably an integer of 0 to 2, and more preferably 0.

In a case where there is a plurality of Rs, the Rs may be the same or different.

The compound A may be used singly or in combination of two or more kinds thereof.

The content of the compound A is preferably 0.01 to 20 mass%, more preferably 0.05 to 10 mass%, and still more preferably 1 to 5 mass% with respect to the total mass of the resin layer.

(Resin X)

The resin layer contains the resin X.

The resin X contains a repeating unit 1 derived from silsesquioxane having a polymerizable group and a repeating unit 2 derived from a monofunctional monomer, and a mass ratio of the repeating unit 1 to the repeating unit 2 is 60/40 to 95/5.

The mass ratio of the repeating unit 1 to the repeating unit 2 (mass of repeating unit 1/mass of repeating unit 2) is preferably 60/40 to 80/20, and more preferably 60/40 to 70/35.

The content of the repeating unit 1 is preferably 10 to 90 mass%, more preferably 30 to 80 mass%, and still more preferably 50 to 70 mass% with respect to all the repeating units of the resin.

The content of the repeating unit 2 is preferably 10 to 90 mass%, more preferably 20 to 70 mass%, and still more preferably 30 to 50 mass% with respect to all the repeating units of the resin.

The repeating unit 1 is a repeating unit derived from silsesquioxane having a polymerizable group. In other words, the repeating unit 1 is a repeating unit obtained by polymerizing silsesquioxane having a polymerizable group.

Examples of the polymerizable group include a radical polymerizable group and a cationical polymerizable group. Examples of the radical polymerizable group include a (meth)acryloyl group. Examples of the cationical polymerizable group include an alicyclic ether group such as an epoxy group or an oxetanyl group, a cyclic acetal group, a cyclic lactone group, a cyclic thioether group, a spiroorthoester group, and a vinyloxy group.

As the polymerizable group, a radical polymerizable group is preferable, and a (meth)acryloyl group is more preferable.

The number of polymerizable groups of the silsesquioxane may be one or two or more.

Silsesquioxane is a silane compound obtained by hydrolyzing a trifunctional silane compound such as

alkoxysilane, chlorosilane, or silanol.

Examples of the structure of the silsesquioxane include an irregular form such as a random structure, a ladder structure, a cage type (completely condensed cage type) structure, and an incomplete cage type structure (a partially cleaved structure having a cage structure, a partially cleaved structure having a structure in which some of silicon atoms are missing from the cage structure and a structure in which a silicon-oxygen bond of a part of the cage structure is cleaved).

The silsesquioxane having a polymerizable group is preferably a silane compound having a basic skeleton represented by Formula (Q).

$$R^Q\text{-}SiO_{3/2} \qquad (Q)$$

In Formula (Q), $R^Q$ represents a monovalent organic group. At least one of $R^Q$ represents a polymerizable group.

The polymerizable group is as described above.

Examples of the silsesquioxane include SQ series (for example, AC-SQ series and MAC-SQ series manufactured by Toagosei Co., Ltd).

The repeating unit 1 may be used singly or in combination of two or more kinds thereof.

The repeating unit 2 is a repeating unit derived from a monofunctional monomer. In other words, the repeating unit 2 is a repeating unit obtained by polymerizing a monofunctional monomer.

The monofunctional monomer is a monomer having one polymerizable group.

Examples of the polymerizable group include the groups exemplified as the polymerizable group of the silsesquioxane described above, and a radical polymerizable group is preferable, and a (meth)acryloyl group is more preferable.

The monofunctional monomer may have a functional group other than the polymerizable group.

Examples of the monofunctional monomer include ethylene glycol monoethyl ether methacrylate, (meth)acrylic acid, 2-(2-ethoxyethoxy) ethyl acrylate, methoxy polyethylene glycol monoacrylate, methoxy polyethylene glycol monomethacrylate, phenoxy polyethylene glycol acrylate, 2-acryloyloxyethyl succinate, 2-ethylhexyl acrylate, 2-hydroxyethyl acrylate, 2-hydroxypropyl acrylate, tetrahydrofurfuryl acrylate, 2-ethylhexyl carbitol acrylate, 3-methoxybutyl acrylate, benzyl acrylate, cyclohexyl acrylate, isoamyl acrylate, isobutyl acrylate, methoxy triethylene glycol acrylate, phenoxy tetraethylene glycol acrylate, cetyl acrylate, isostearyl acrylate, stearyl acrylate, and styrene monomers.

As the monofunctional monomer, a monofunctional acrylate monomer is preferable.

The repeating unit 2 may be used singly or in combination of two or more kinds thereof.

The resin X may be used singly or in combination of two or more kinds thereof.

The content of the resin X is preferably 80 to 99.99 mass%, more preferably 85 to 99.95 mass%, and still more preferably 90 to 99 mass% with respect to the total mass of the resin layer.

The resin layer may contain other components in addition to the compound A and the resin X.

Examples of the other components include a pH adjusting agent, a surfactant, a viscosity adjusting agent, and a leveling agent.

The thickness of the resin layer is preferably 1 to 150 μm, more preferably 2 to 40 μm, and still more preferably 5 to 25 μm.

<Other layers>

The spectacle lens may have other layers in addition to the lens base and the resin layer.

Examples of the other layer include a primer layer and an antireflection layer.

(Primer layer)

The primer layer is a layer that improves adhesion of the resin layer to the lens base.

Examples of a position of the primer layer include a position between the lens base and the resin layer.

Examples of a material constituting the primer layer include a resin. Specific examples thereof include a urethane-based resin, an epoxy-based resin, a phenol-based resin, a polyimide-based resin, a polyester-based resin, a bismaleimide-based resin, and a polyolefin-based resin.

(Antireflection layer)

The structure of the antireflection layer may be either a single layer structure or a multilayer structure.

The antireflection layer is preferably an inorganic antireflection layer. The inorganic antireflection layer means an antireflection layer composed of an inorganic compound.

The antireflection layer having a multilayer structure may have a structure in which a low refractive index layer and a high refractive index layer are alternately laminated.
Examples of a material constituting the high refractive index layer include titanium, zircon, aluminum, niobium, tantalum, and lanthanum oxide. Examples of a material constituting the low refractive index layer include a silica oxide.

[Method of producing spectacle lens]

Examples of the method of producing the spectacle lens include known production methods.
Specific examples thereof include a method of producing a spectacle lens, the method including a step of applying a composition for forming a resin layer on a lens base and curing the composition.
Examples of a method of applying the composition for forming a resin layer include a dip coating method, a roll coating method, a bar coating method, a spin coating method, a spray coating method, a die coating method, and a gravure coating method.
Examples of a curing method include exposure treatment.
Exposure light in the exposure treatment is not particularly limited, but ultraviolet rays are preferable. Examples of a light source for exposure include an electrodeless UV lamp.
As conditions for the exposure treatment, suitable conditions can be selected depending on the type of polymerization initiator to be used.
The illuminance of the exposure light is preferably 1 to 100 $mW/cm^2$.
The irradiation time of the exposure light is preferably 5 to 60 seconds.
In addition, drying treatment may be performed, and heating may or may not be performed at the time of drying.
The heating time is preferably 10 to 180 minutes.
The heating temperature is preferably 70 to 180°C.

<Composition for forming resin layer>

The composition for forming a resin layer is a composition for forming a resin layer.
The composition for forming a resin layer preferably contains the compound A, a silsesquioxane having a polymerizable group, a monofunctional monomer, a polymerization initiator, and a solvent.
The compound A, the silsesquioxane having a polymerizable group, and the monofunctional monomer are as described in the resin layer.

(Polymerization initiator)

Examples of the polymerization initiator include a photopolymerization initiator and a thermal polymerization initiator, and the polymerization initiator may be a radical polymerization initiator or a photopolymerization initiator.
Examples of the polymerization initiator include Omnirad 127, 184, 907, 651, 1700, 1800, 819, and 369 and TPO (manufactured by IGM Resins B.V.); DAROCUR 1173 (manufactured by Sigma-Aldrich); ESACURE KIP150 and TZT (manufactured by Nihon SiberHegner K.K.); KAYACURE BMS and KAYACURE DMBI (manufactured by Nippon Kayaku Co., Ltd.); and Tinuvin 400, Tinuvin 405, Tinuvin 460, Tinuvin 477, Tinuvin 479, and Tinuvin 1577 (manufactured by BASF).
Examples of the cationic polymerization initiator include onium salts composed of one or more cations selected from the group consisting of aromatic sulfonium, aromatic iodonium, aromatic diazonium, and pyridinium, and one or more anions selected from the group consisting of $BF_4^-$, $PF^{6-}$, $SbF^{6-}$, $AsF^{6-}$, $CF_3SO^{3-}$, $(CF_3SO_2)_2N^-$, and $B(C_6F_5)^{4-}$; and a thermal cationic polymerization initiator such as an aluminum complex such as aluminum chloride.
The polymerization initiator may be used singly or in combination of two or more kinds thereof.
The content of the polymerization initiator is preferably 0.001 to 5 mass%, and more preferably 0.01 to 5 mass% with respect to the total solid content of the composition for forming a resin layer.

(Solvent)

Examples of the solvent include an alcohol-based solvent, a ketone-based solvent, an ether-based solvent, and an ester-based solvent.
Examples of the ether-based solvent include diethyl ether, tetrahydrofuran, propylene glycol monobutyl ether, and propylene glycol monomethyl ether.
Examples of the ketone-based solvent include methyl ethyl ketone.
Examples of the ester-based solvent include butyl acetate.
The solvent may be used singly or in combination of two or more kinds thereof.
The composition for forming a resin layer may contain other components that can be contained in the resin layer.

EXAMPLES

Hereinafter, the spectacle lens of the present disclosure will be described in more detail with reference to Examples and Comparative Examples, but the spectacle lens of the present disclosure is not limited by these Examples at all.

[Various components]

<Compound A>

A compound A1 was synthesized according to the following scheme.

[Chemical Formula 2]

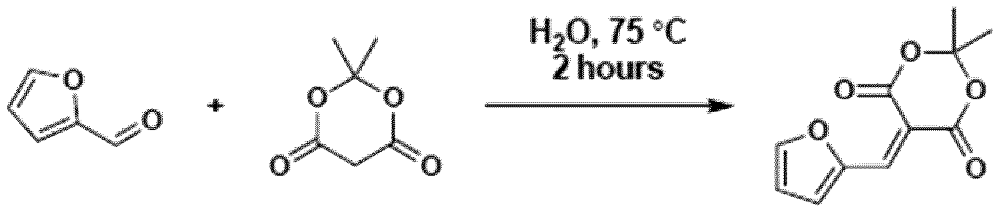


Compound A1-1 Compound A1-2 Compound A1-3

First, a compound A1-3 was synthesized with reference to Melmy et al., Photoswitching Using Visible Light: A New Class of Organic Photochromic Molecules, J. Am. Chem. Soc., 2014.

Specifically, a compound A1-2 (793 mg, 5.5 mmol) and water (40 mL) were mixed, and a compound A1-1 (480 mg, 5 mmol) was further added, then the mixture was stirred at 75°C for 2 hours. Thereafter, the obtained mixed liquid was cooled to room temperature, filtered, and then washed with cold water to obtain the compound A1-3.

[Chemical Formula 3]

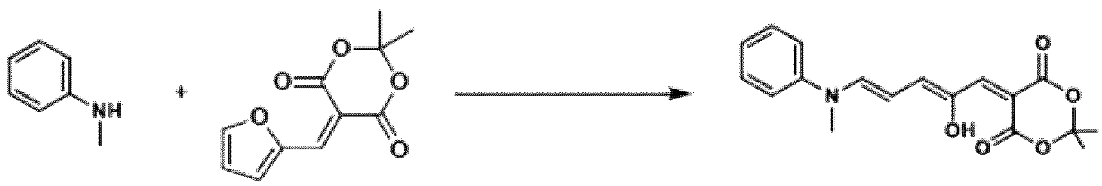

Compound A1-4 Compound A1-3 Compound A1

Next, the compound A1 was synthesized from the compound A1-3 with reference to Hemmer et al, Tunable Visible and Near Infrared Photoswitches, J. Am. Chem. Soc., 2016.

Specifically, the obtained compound A1-3 (106 mg) and compound A1-4 (104 μL) were stirred at room temperature for 1 hour to obtain a mixed solution. The resulting mixed liquid was filtered, and the filtrate was further washed with hexane and ultrasonically treated in tetrahydrofuran, then further diluted with diethyl ether and filtered again to obtain the compound A1.

Furthermore, the obtained compound A1 was diluted with tetrahydrofuran to have the concentration in the following table.

<Preparation of composition for forming resin layer>

Various components shown in the following table were mixed to prepare each composition for forming a resin layer.

The "parts by mass" in the "compound A1" is parts by mass of the tetrohydrofuran solution contained in the compound A1. Specifically, Example 1 shows that 10 parts by mass of a tetrohydrofuran solution containing 6% by mass of the compound A1 was used.

[Table 1]

| | Composition for forming resin layer | MAC-SQ-HDM | EOEMA | AA | Compound A1 | | DAROCUR 1173 |
|---|---|---|---|---|---|---|---|
| | | Parts by mass | Parts by mass | Parts by mass | Concentration | Parts by mass | Parts by mass |
| Example 1 | 1 | 69 | 20 | 0 | 6 | 10 | 1 |
| Example 2 | 2 | 69 | 0 | 20 | 6 | 10 | 1 |
| Comparative Example 1 | 3 | 95 | 0 | 0 | 6 | 4 | 1 |
| Comparative Example 2 | 4 | 69 | 20 | 0 | 3 | 10 | 1 |
| Comparative Example 3 | 5 | 55 | 16 | 0 | 22 | 28 | 1 |
| Comparative Example 4 | 6 | 55 | 16 | 0 | 10 | 28 | 1 |

· MAC-SQ-HDM: silsesquioxane having a polymerizable group, 50 mass% propylene glycol monobutyl ether solution, manufactured by Toagosei Co., Ltd.
· EOEMA: Ethylene glycol monoethyl ether methacrylate
· AA: acrylic acid
· Compound A1: Compound A1 described above
· DAROCUR 1173: manufactured by BASF

[Example 1]

A plano-convex lens (NL3-AS, 0.00D, and refractive index 1.60, manufactured by Nikon-Essilor Co., Ltd.) was used as the lens base 1.

The composition 1 for forming a resin layer was spin-coated on the convex surface side of the lens base 1 at 200 rpm for 60 seconds so that the thickness after drying was 5.7 μm. Next, the obtained coating film was dried at 80°C for 20 minutes by using an oven to obtain a sample. Furthermore, while the sample was conveyed on a belt conveyor (conveying speed: 4 m/min), the coating film was exposed to light with an output of 50% (illuminance: about 60 $mW/cm^2$) by using a FusionUV LightHammer 6 to produce a spectacle lens of Example 1.

[Example 2, Comparative Examples 2 to 4]

In Example 2 and Comparative Examples 2 to 4, spectacle lenses of Example 2 and Comparative Examples 2 to 4 were produced in the same procedure as in Example 1 except that the composition for forming a resin layer was changed as shown in the table.

[Comparative Example 1]

A spectacle lens of Comparative Example 1 was produced by the same procedure as in Example 1 except that a lens (NL5-AS, refractive index 1.74, manufactured by Nikon-Essilor Co., Ltd.) was used as the lens base 2 and the composition 3 for forming a resin layer was used as the composition for forming a resin layer. Although the lens was not curved, the shape of the lens did not affect the evaluation of the subsequent stage.

[Evaluation]

<Transmittance at wavelength of 556 nm>

The transmittance of each obtained spectacle lens at the wavelength of 556 nm was measured by using a

spectrophotometer (U-4100, manufactured by Hitachi, Ltd). In the above measurement, a spectacle lens after being left for 30 minutes under a fluorescent lamp in a room was used.

<Difference (ΔT) in transmittance before and after specific irradiation>

First, an average transmittance in each of the wavelength region of 380 to 780 nm, the wavelength region of 430 to 470 nm, the wavelength region of 530 to 570 nm, and the wavelength region of 630 to 670 nm of each spectacle lens before specific irradiation was measured by using a spectrophotometer (U-4100, manufactured by Hitachi, Ltd). In the above measurement, a spectacle lens after being left for 30 minutes under a fluorescent lamp in a room was used.

Next, by using a slide projector (CABIN CS-15, manufactured by Iwasaki Electric Co., Ltd., halogen lamp used), each spectacle lens was fixed at a position 10 cm from the light source, and irradiated with ultraviolet rays at 90 $mW/cm^2$ for 240 seconds. Thereafter, an average transmittance in each wavelength region after the specific irradiation was measured by using a spectrophotometer (U-4100, manufactured by Hitachi, Ltd), and differences ($\Delta T_1$ to $\Delta T_4$, results are shown in the average ΔT column in the table) between the average transmittances before and after the specific irradiation in the respective wavelength regions were obtained.

<Brightening effect>

Each of the obtained spectacle lenses was framed in a frame, and a wearing test by a subject in his/her 40's to 60's was performed as spectacles, and sensory evaluation was performed.

For sensory evaluation, a general person in his/her 40's to 60's was selected as a subject, and in order not to have prejudice, the person was caused to wear glasses using the spectacle lens of the present disclosure in the form of a blind test, and a questionnaire was used to confirm each effect of whether a color looks brighter and more vivid and whether white looks whiter, and the brightening effect was evaluated according to the following evaluation criteria.

As to whether or not a color looks brighter and more vivid, a questionnaire was conducted to determine whether or not the subject felt that a white screen of a personal computer (particularly working on an excel file) was whiter.

As to whether or not white looks whiter, a questionnaire was conducted on whether or not the subject wearing the above glasses in a room and in a dim outdoor area from the evening to the night felt brightness as compared with an undyed clear lens. The undyed clear lens is a lens base (the lens base 1 or the lens base 2) used in each of the spectacle lenses of Examples and Comparative Examples.

A: Unlike the undyed clear lens, at least one of the following effects was obtained: scenery and objects (in particular, red) appeared vividly bright in a dim environment; and a white screen of a personal computer appeared whiter.

B: There was no difference from the case of the undyed clear lens, red appeared dull, and a subject did not feel that the white screen of the personal computer was whiter.

In the table, the meanings of the descriptions are as follows.

The thickness of the resin layer was measured by using a microspectrometer (USPM, manufactured by Olympus Corporation).

"X ratio" indicates a mass ratio of the repeating unit 1 to the repeating unit 2 (mass of repeating unit 1/mass of repeating unit 2).

[Table 2]

| | Spectacle lens | | | | | | | | Transmittance (%) 556 nm | T before specific irradiation (%) | | | | Average ΔT(%) | | | | Brightening effect |
|---|---|---|---|---|---|---|---|---|---|---|---|---|---|---|---|---|---|---|
| | Lens base | Resin layer | | | | | | | | | | | | | | | | |
| | | Composition for forming resin layer | Resin (mass ratio) | | | | Compound A1 | Thickness (μm) | | 380-780 nm | 430-470 nm | 530-570 nm | 630-670 nm | 380-780 nm | 430-470 nm | 530-570 nm | 630-670 nm | |
| | | | Repeating unit 1 | Repeating unit 2 | | X ratio | Content (mass%) | | | | | | | | | | | |
| | | | MAC-SQ-RDM | EOEMA | AA | | | | | | | | | | | | | |
| Example 1 | 1 | 1 | 7 | 4 | - | 1.75 | 1 | 5.7 | 77.5 | 81.2 | 88.3 | 78.5 | 90.8 | 2.2 | 0.5 | 11.5 | 0.0 | A |
| Example 2 | 1 | 2 | 7 | - | 4 | 1.75 | 1 | 7.5 | 72.3 | 80.1 | 87.6 | 74.0 | 90.7 | 2.9 | 0.7 | 16.2 | 0.0 | A |
| Comparative Example 1 | 2 | 3 | 1 | - | - | - | 0.5 | 13.9 | 78.8 | 78.7 | 85.5 | 79.6 | 88.0 | 1.0 | 0.0 | 6.0 | 0.0 | B |
| Comparative Example 2 | 1 | 4 | 7 | 4 | - | 1.75 | 0.5 | 5.7 | 83.4 | 82.3 | 88.6 | 84.4 | 90.8 | 1.1 | 0.2 | 5.7 | 0.0 | B |
| Comparative Example 3 | 1 | 5 | 7 | 4 | - | 1.75 | 12 | 0.5 | 34.6 | 73.1 | 86.5 | 35.6 | 90.7 | 10.2 | 2.3 | 54.4 | 0.1 | B |
| Comparative Example 4 | 1 | 6 | 7 | 4 | - | 1.75 | 6 | 1 | 45.3 | 75.1 | 87.0 | 46.3 | 90.8 | 8.2 | 1.8 | 43.7 | 0.0 | B |

As shown in Table 1, it was confirmed that the spectacle lens of the present disclosure can achieve a desired effect.

REFERENCE SIGNS LIST

10 spectacle lens
12 lens base
14 resin layer

**Claims**

1. A spectacle lens comprising:

a lens base; and
a resin layer disposed on the lens base,
wherein the resin layer contains a compound represented by Formula (A) and a resin,
the resin contains a repeating unit 1 derived from silsesquioxane having a polymerizable group and a repeating unit 2 derived from a monofunctional monomer,
a mass ratio of the repeating unit 1 to the repeating unit 2 is 60/40 to 95/5, and
a transmittance of the spectacle lens at a wavelength of 556 nm is 65 to 80%:

[Chemical Formula 1]

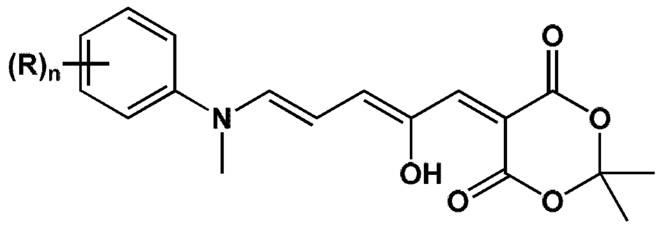

**(A)**

in Formula (A), R represents a methyl group, a methoxy group, or a dialkylamino group, and n represents an integer of 0 to 5.

2. The spectacle lens according to claim 1, wherein the transmittance at the wavelength of 556 nm is 68 to 79%.

3. The spectacle lens according to claim 1 or 2, wherein when the spectacle lens is irradiated by using a halogen lamp at an illuminance of 90 W/cm$^2$ for 240 seconds, an average transmittance of the spectacle lens before the irradiation in a wavelength range of 530 to 570 nm is defined as $T_{31}$ (%), and an average transmittance of the spectacle lens after the irradiation in the wavelength range of 530 to 570 nm is defined as $T_{32}$ (%), $\Delta T_3$ represented by Formula (3) is 10 to 20%:

$$\Delta T_3 = T_{32} - T_{31} \quad \text{Formula (3).}$$

FIG. 1

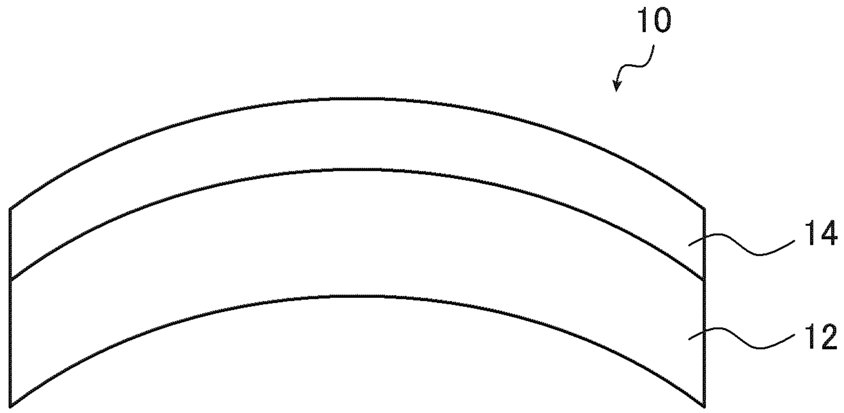

**INTERNATIONAL SEARCH REPORT**

International application No.
**PCT/JP2023/022175**

**A. CLASSIFICATION OF SUBJECT MATTER**

***G02C 7/00***(2006.01)i; ***C08F 230/08***(2006.01)i; ***C08K 5/18***(2006.01)i; ***C08L 43/04***(2006.01)i; ***C08F 2/00***(2006.01)i; ***G02B 1/04***(2006.01)i; ***G02B 5/22***(2006.01)i
FI: G02C7/00; C08F2/00 C; C08F230/08; C08K5/18; C08L43/04; G02B1/04; G02B5/22

According to International Patent Classification (IPC) or to both national classification and IPC

**B. FIELDS SEARCHED**

Minimum documentation searched (classification system followed by classification symbols)

G02C7/00; C08F230/08; C08K5/18; C08L43/04; C08F2/00; G02B1/04; G02B5/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | CN 111849248 A (UNIVERSITY OF ELECTRONIC SCIENCE AND TECHNOLOGY OF CHINA) 30 October 2020 (2020-10-30) entire text | 1-3 |
| A | CN 108929595 A (UNIVERSITY OF ELECTRONIC SCIENCE AND TECHNOLOGY OF CHINA) 04 December 2018 (2018-12-04) entire text, all drawings | 1-3 |
| A | WO 2017/189700 A1 (THE REGENTS OF THE UNIVERSITY OF CALIFORNIA) 02 November 2017 (2017-11-02) entire text, all drawings | 1-3 |
| A | JP 2013-524300 A (OAKLEY, INCORPORATED) 17 June 2013 (2013-06-17) entire text, all drawings | 1-3 |
| A | JP 2010-204383 A (IDEMITSU KOSAN COMPANY, LIMITED) 16 September 2010 (2010-09-16) entire text, all drawings | 1-3 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 July 2023** | **25 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/022175**

| Patent document cited in search report | Publication date (day/month/year) | Patent family member(s) | Publication date (day/month/year) |
|---|---|---|---|
| CN 111849248 A | 30 October 2020 | (Family: none) | |
| CN 108929595 A | 04 December 2018 | (Family: none) | |
| WO 2017/189700 A1 | 02 November 2017 | US 2019/0127345 A1<br>entire text, all drawings | |
| JP 2013-524300 A | 17 June 2013 | US 2011/0255051 A1<br>entire text, all drawings<br>WO 2011/130314 A1<br>EP 2561321 A1<br>AU 2011240610 A1<br>CA 2796235 A1<br>SG 184840 A1<br>CN 102947680 A<br>BR 112012025855 A2 | |
| JP 2010-204383 A | 16 September 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013008825 A


### Non-patent literature cited in the description


- **MELMY et al.** Photoswitching Using Visible Light: A New Class of Organic Photochromic Molecules. *J. Am. Chem. Soc.*, 2014
- **HEMMER et al.** Tunable Visible and Near Infrared Photoswitches. *J. Am. Chem. Soc.*, 2016